(19) **Europäisches Patentamt / European Patent Office / Office européen des brevets**

(11) **EP 4 391 302 A1**

(12) # EUROPEAN PATENT APPLICATION
published in accordance with Art. 153(4) EPC

(43) Date of publication:
**26.06.2024 Bulletin 2024/26**

(21) Application number: **21954308.9**

(22) Date of filing: **19.08.2021**

(51) International Patent Classification (IPC):
**H02J 50/20** (2016.01)      **H02J 50/40** (2016.01)
**H02J 50/80** (2016.01)

(52) Cooperative Patent Classification (CPC):
**H02J 50/20; H02J 50/40; H02J 50/80**

(86) International application number:
**PCT/KR2021/011042**

(87) International publication number:
**WO 2023/022261 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **JANG, Jihwan**
  **Seoul 06772 (KR)**
• **LEE, Myung Hee**
  **Seoul 06772 (KR)**
• **OH, Jaeky**
  **Seoul 06772 (KR)**
• **PARK, Jae Yong**
  **Seoul 06772 (KR)**
• **HE, Yecheng**
  **Seoul 06772 (KR)**
• **KIM, Sungjin**
  **Seoul 06772 (KR)**

(74) Representative: **Plasseraud IP**
**66, rue de la Chaussée d'Antin**
**75440 Paris Cedex 09 (FR)**

(54) **APPARATUS AND METHOD FOR DISTRIBUTING POWER IN WIRELESS COMMUNICATION SYSTEM**

(57)    In order to perform a wireless power procedure using a coordinator device in a wireless communication system, a method of operating the coordinator device may comprise a coordinator device (virtual coordinator) performing initial configuration for wireless power sharing, the coordinator device collecting power information from a demander device and a supplier device, the coordinator device performing calculation for power sharing based on the collected power information, the coordinator device sharing power based on a result of calculation for power sharing and the coordinator storing surplus power after the power sharing.

**FIG. 11**

## Description

### Technical Field

The following description relates to a wireless communication system and relates to a device and method for distributing power in a wireless communication system.

### Background Art

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

### Disclosure

### Technical Problem

The present disclosure relates to a device and method for efficiently distributing power using wireless power transmission technology in a wireless communication system.

The present disclosure can provide a device and method for wirelessly sharing power through a virtual coordinator in a wireless communication system.

The technical objects to be achieved in the present disclosure are not limited to the above-mentioned technical objects, and other technical objects that are not mentioned may be considered by those skilled in the art through the embodiments described below.

### Technical Solution

As an example of the present disclosure, a method of operating a coordinator device in a wireless communication system may comprise registering at least one demander device and at least one supplier device, receiving power information from the at least one demander device and the at least one supplier device, performing scheduling for power sharing based on the power information, and receiving power from the at least one supplier device according to the scheduling and transmitting power to the at least one demander device.

As an example of the present disclosure, a method of operating a demander device in a wireless communication system may comprise transmitting a message requesting registration as a demander to a coordinator device, transmitting power information of the demander device to the coordinator device and receiving power from the coordinator device according to scheduling for power sharing determined based on the power information.

As an example of the present disclosure, a method of operating a supplier device in a wireless communication system may comprise transmitting a message requesting registration as a supplier to a coordinator device, transmitting power information of the supplier device to the coordinator device and transmitting power to the coordinator device according to scheduling for power sharing determined based on the power information.

As an example of the present disclosure, a coordinator device in a wireless communication system may comprise a transceiver, a circuit for power reception and transmission and a processor coupled to the transceiver and the circuit. The processor may register at least one demander device and at least one supplier device, receive power information from the at least one demander device and the at least one supplier device, perform scheduling for power sharing based on the power information and receive power from the at least one supplier device according to the scheduling and transmit power to the at least one demander device.

As an example of the present disclosure, a demander device in a wireless communication system may comprise a transceiver, a circuit for power reception and a processor coupled to the transceiver and the circuit. The processor may transmit a message requesting registration as a demander to a coordinator device, transmit power information of the demander device to the coordinator device and receive power from the coordinator device according to scheduling for power sharing determined based on the power information.

As an example of the present disclosure, a supplier device in a wireless communication system may comprise a transceiver, a circuit for power transmission and a processor coupled to the transceiver and the circuit. The processor may transmit a message requesting registration as a supplier to a coordinator device, transmit power information of the supplier device to the coordinator device and transmit power to the coordinator device according to scheduling for power sharing determined based on the power information.

As an example of the present disclosure, a device may comprise at least one processor and at least one computer memory coupled to the at least one processor and configured to store instructions indicating operations as executed by the at least one processor. The operations may comprise registering at least one demander device and at least one supplier device, receiving power information from the at least one demander device and the at least one supplier device, performing scheduling for power sharing based on the power information and receiving power from the at least one supplier device according to the scheduling and transmitting power to the at least one demander device.

As an example of the present disclosure, a non-transitory computer-readable medium storing at least one instruction may comprise the at least one instruction executable by a processor. The at least one instruction may control a device to register at least one demander device and at least one supplier device, receive power information from the at least one demander device and the at least one supplier device, perform scheduling for power sharing based on the power information, and receive power from the at least one supplier device according to the scheduling and transmit power to the at least one demander device.

The above-described aspects of the present disclosure are merely some of the preferred embodiments of the present disclosure, and various embodiments reflecting the technical features of the present disclosure may be derived and understood by those of ordinary skill in the art based on the following detailed description of the disclosure.

**Advantageous Effects**

As is apparent from the above description, the embodiments of the present disclosure have the following effects.

According to the present disclosure, it is possible to increase power use efficiency of various devices in a network.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

**Description of Drawings**

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 illustrates an example of a communication system applicable to the present disclosure.

FIG. 2 illustrates an example of a wireless apparatus applicable to the present disclosure.

FIG. 3 illustrates another example of a wireless device applicable to the present disclosure.

FIG. 4 illustrates an example of a hand-held device applicable to the present disclosure.

FIG. 5 illustrates an example of a car or an autonomous driving car applicable to the present disclosure.

FIG. 6 illustrates an example of artificial intelligence (AI) device applicable to the present disclosure.

FIG. 7 illustrates physical channels applicable to the present disclosure and a signal transmission method using the same.

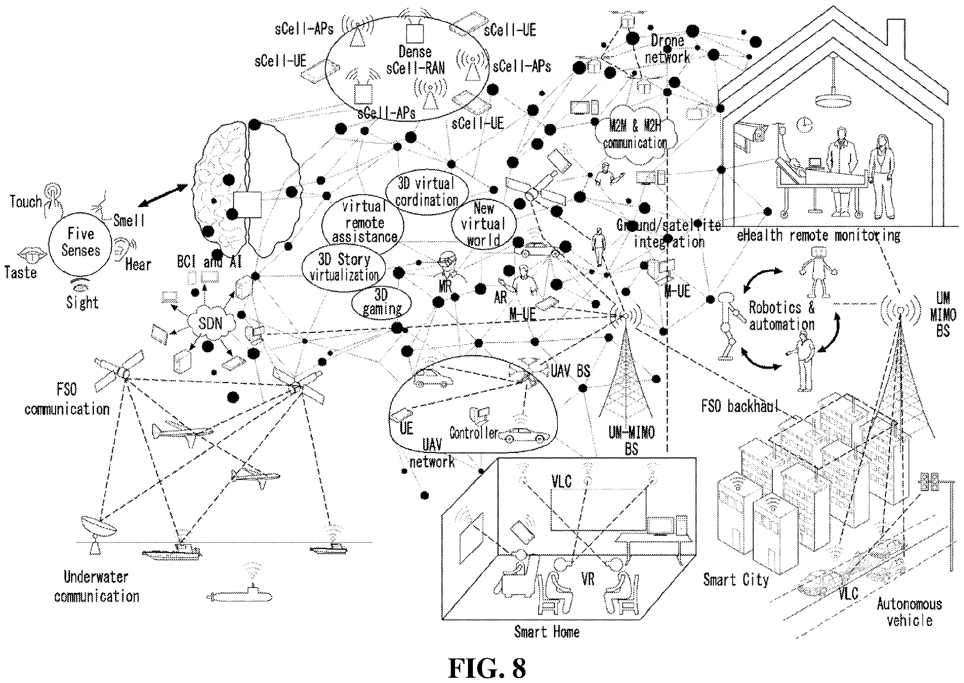

FIG. 8 illustrates an example of a communication structure providable in a 6th generation (6G) system applicable to the present disclosure.

FIG. 9 is a view showing an electromagnetic spectrum applicable to the present disclosure.

FIG. 10 is a view showing a THz communication method applicable to the present disclosure.

FIG. 11 shows the concept of a virtual power shared model according to an embodiment of the present disclosure.

FIG. 12 shows an example of a virtual power shared model according to an embodiment.

FIG. 13 shows a schematic structure of a wireless communication system according to an embodiment.

FIG. 14 shows a structure of a device in a wireless communication system according to an embodiment.

FIG. 15 shows an example of a configuration of a circuit for receiving and generating power in a wireless communication system according to an embodiment.

FIG. 16 shows an example of a configuration of a transceiver circuit in a wireless communication system according to an embodiment.

FIG. 17 shows an example of a functional configuration of an energy reception circuit in a wireless communication system according to an embodiment.

FIG. 18 shows an example of a configuration of a rectifier circuit included in an energy reception circuit in a wireless communication system according to an embodiment.

FIG. 19 shows an example of a configuration of an LDO (low drop out) regulator circuit included in an energy reception circuit in a wireless communication system according to an embodiment.

FIG. 20 shows an example of a configuration of a charging control circuit included in an energy reception circuit in a wireless communication system according to an embodiment.

FIG. 21 shows an example of a procedure for power sharing in a wireless communication system according to an embodiment.

FIG. 22 shows an example of a procedure of managing power in a wireless communication system according to an embodiment.

FIG. 23 shows an example of a procedure of receiving power in a wireless communication system according to an embodiment.

FIG. 24 shows an example of a procedure of supplying power in a wireless communication system according to an embodiment.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

## Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

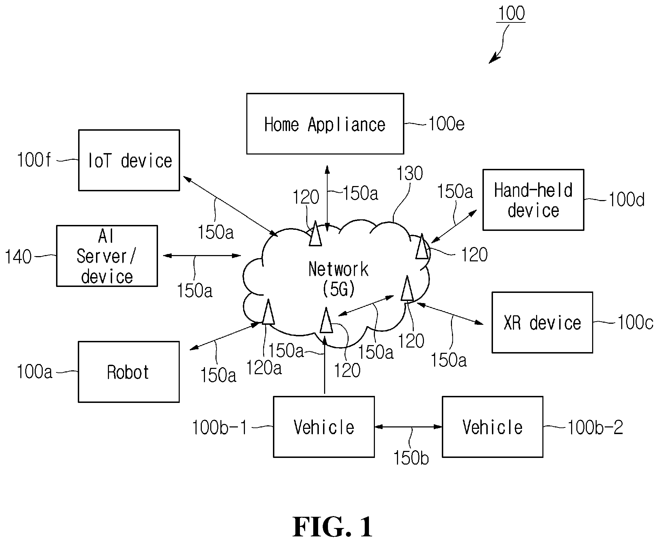

FIG. 1 illustrates an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

**Communication system applicable to the present disclosure**

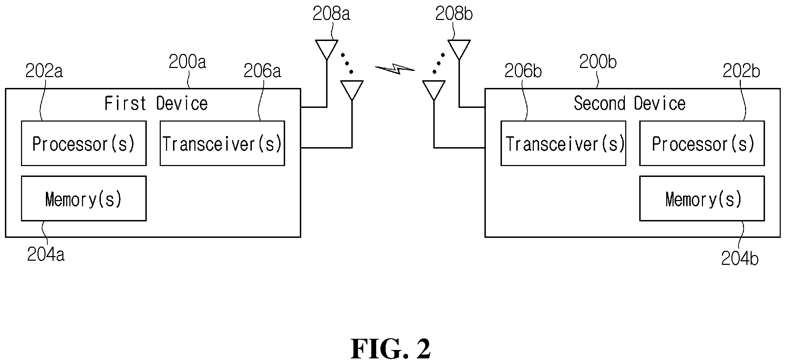

FIG. 2 illustrates an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be coupled with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be coupled with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be coupled with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be coupled with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be coupled with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be coupled with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be coupled with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be coupled with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

## Structure of wireless device applicable to the present disclosure

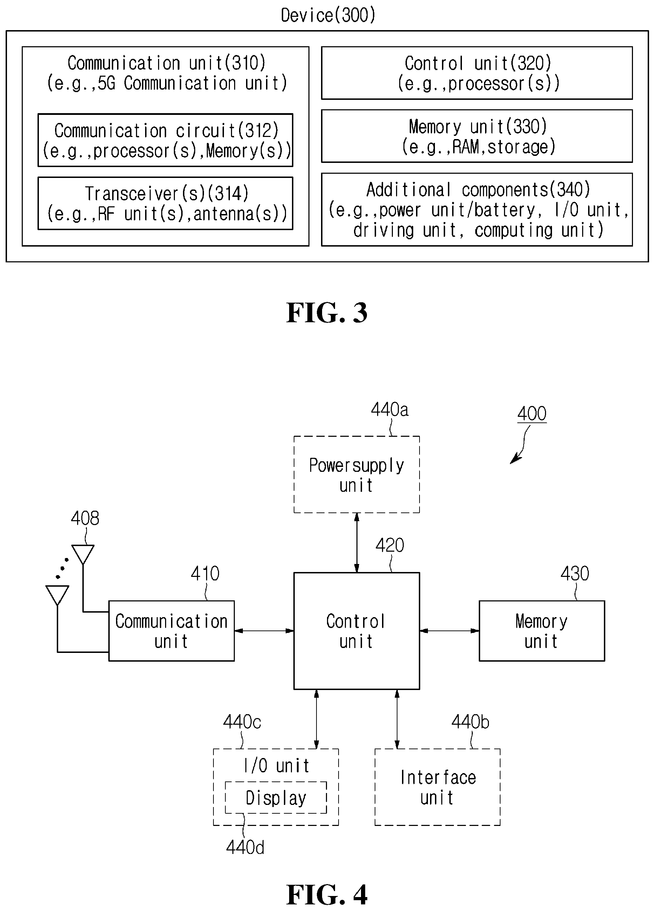

FIG. 3 illustratesanother example of a wireless device applicable to the present disclosure.

Referring to FIG. 3, a wireless device 300 may correspond to the wireless devices 200a and 200b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202a and 202b and/or one or more memories 204a and 204b of FIG. 2. For example, the transceiver(s) 314 may include one or more transceivers 206a and 206b and/or one or more antennas 208a and 208b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.

The additional components 340 may be variously configured according to the types of the wireless devices. For example, the additional components 340 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 3, various elements, components, units/portions and/or modules in the wireless device 300 may be coupled with each other through wired interfaces or at least some thereof may be wirelessly coupled through the communication unit 310. For example, in the wireless device 300, the control unit 320 and the communication unit 310 may be coupled by wire, and the control unit 320 and the first unit (e.g., 130 or 140) may be wirelessly coupled through the communication unit 310. In addition, each element, component, unit/portion and/or module of the wireless device 300 may further include one or more elements. For example, the control unit 320 may be composed of a set of one or more processors. For example, the control unit 320 may be composed of a set of a communication control processor, an application processor, an electronic control unit (ECU), a graphic processing processor, a memory control processor, etc. In another example, the memory unit 330 may be composed of a random access memory (RAM), a dynamic RAM (DRAM), a read only memory (ROM), a flash memory, a volatile memory, a non-volatile memory and/or a combination thereof.

**Hand-held device applicable to the present disclosure**

FIG. 4 illustrates an example of a hand-held device applicable to the present disclosure.
FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).
Referring to FIG. 4, the hand-held device 400 may include an antenna unit (antenna) 408, a communication unit (transceiver) 410, a control unit (controller) 420, a memory unit (memory) 430, a power supply unit (power supply) 440a, an interface unit (interface) 440b, and an input/output unit 440c. An antenna unit (antenna) 408 may be part of the communication unit 410. The blocks 410 to 430/440a to 440c may correspond to the blocks 310 to 330/340 of FIG. 3, respectively.
The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440a may supply power to the hand-held device 400 and include a wired/wireless charging circuit, a battery, etc. The interface unit 440b may support connection between the hand-held device 400 and another external device. The interface unit 440b may include various ports (e.g., an audio input/output port and a video input/output port) for connection with the external device. The input/output unit 440c may receive or output video information/signals, audio information/signals, data and/or user input information. The input/output unit 440c may include a camera, a microphone, a user input unit, a display 440d, a speaker and/or a haptic module.
For example, in case of data communication, the input/output unit 440c may acquire user input information/signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440c in various forms (e.g., text, voice, image, video and haptic).

**Type of wireless device applicable to the present disclosure**

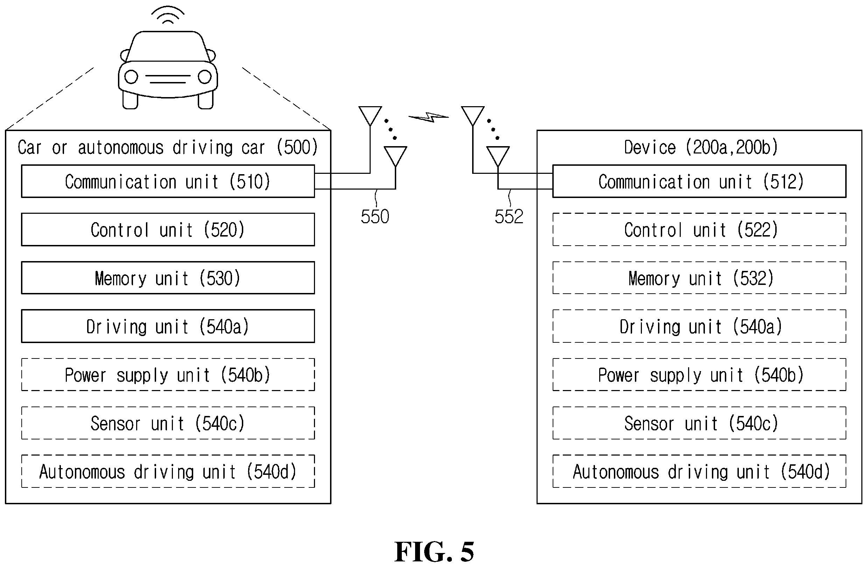

FIG. 5 illustrates an example of a car or an autonomous driving car applicable to the present disclosure.

FIG. 5 shows a car or an autonomous driving vehicle applicable to the present disclosure. The car or the autonomous driving car may be implemented as a mobile robot, a vehicle, a train, a manned/unmanned aerial vehicle (AV), a ship, etc. and the type of the car is not limited.

Referring to FIG. 5, the car or autonomous driving car 500 may include an antenna unit (antenna) 508, a communication unit (transceiver) 510, a control unit (controller) 520, a driving unit 540a, a power supply unit (power supply) 540b, a sensor unit 540c, and an autonomous driving unit 540d. The antenna unit 550 may be configured as part of the communication unit 510. The blocks 510/530/540a to 540d correspond to the blocks 410/430/440 of FIG. 4.

The communication unit 510 may transmit and receive signals (e.g., data, control signals, etc.) to and from external devices such as another vehicle, a base station (e.g., a base station, a road side unit, etc.), and a server. The control unit 520 may control the elements of the car or autonomous driving car 500 to perform various operations. The control unit 520 may include an electronic control unit (ECU).

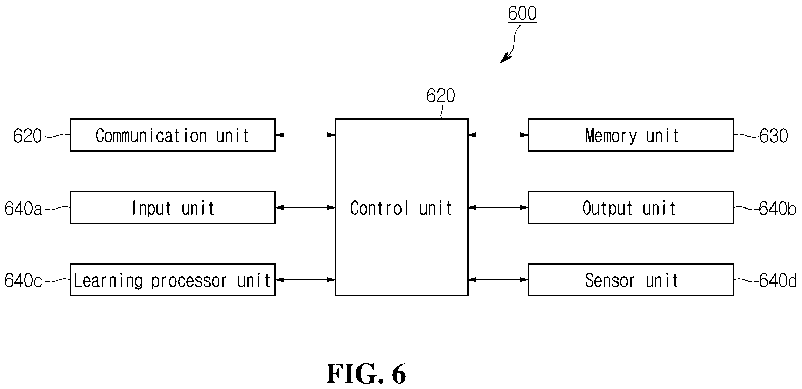

FIG. 6 illustrates an example of artificial intelligence (AI) device applicable to the present disclosure. For example, the AI device may be implemented as fixed or movable devices such as a TV, a projector, a smartphone, a PC, a laptop, a digital broadcast terminal, a tablet PC, a wearable device, a set-top box (STB), a radio, a washing machine, a refrigerator, a digital signage, a robot, a vehicle, or the like.

Referring to FIG. 6, the AI device 600 may include a communication unit (transceiver) 610, a control unit (controller) 620, a memory unit (memory) 630, an input/output unit 640a/640b, a leaning processor unit (learning processor) 640c and a sensor unit 640d. The blocks 610 to 630/640a to 640d may correspond to the blocks 310 to 330/340 of FIG. 3, respectively.

The communication unit 610 may transmit and receive wired/wireless signals (e.g., sensor information, user input, learning models, control signals, etc.) to and from external devices such as another AI device (e.g., FIG. 1, 100x, 120 or 140) or the AI server (FIG. 1, 140) using wired/wireless communication technology. To this end, the communication unit 610 may transmit information in the memory unit 630 to an external device or transfer a signal received from the external device to the memory unit 630.

The control unit 620 may determine at least one executable operation of the AI device 600 based on information determined or generated using a data analysis algorithm or a machine learning algorithm. In addition, the control unit 620 may control the components of the AI device 600 to perform the determined operation. For example, the control unit 620 may request, search for, receive or utilize the data of the learning processor unit 640c or the memory unit 630, and control the components of the AI device 600 to perform predicted operation or operation, which is determined to be desirable, of at least one executable operation. In addition, the control unit 620 may collect history information including operation of the AI device 600 or user's feedback on the operation and store the history information in the memory unit 630 or the learning processor unit 640c or transmit the history information to the AI server (FIG. 1, 140). The collected history information may be used to update a learning model.

The memory unit 630 may store data supporting various functions of the AI device 600. For example, the memory unit 630 may store data obtained from the input unit 640a, data obtained from the communication unit 610, output data of the learning processor unit 640c, and data obtained from the sensing unit 640. In addition, the memory unit 630 may store control information and/or software code necessary to operate/execute the control unit 620.

The input unit 640a may acquire various types of data from the outside of the AI device 600. For example, the input unit 640a may acquire learning data for model learning, input data, to which the learning model will be applied, etc. The input unit 640a may include a camera, a microphone and/or a user input unit. The output unit 640b may generate video, audio or tactile output. The output unit 640b may include a display, a speaker and/or a haptic module. The sensing unit 640 may obtain at least one of internal information of the AI device 600, the surrounding environment information of the AI device 600 and user information using various sensors. The sensing unit 640 may include a proximity sensor, an illumination sensor, an acceleration sensor, a magnetic sensor, a gyro sensor, an inertia sensor, a red green blue (RGB) sensor, an infrared (IR) sensor, a finger scan sensor, an ultrasonic sensor, an optical sensor, a microphone and/or a radar.

The learning processor unit 640c may train a model composed of an artificial neural network using training data. The learning processor unit 640c may perform AI processing along with the learning processor unit of the AI server (FIG. 1, 140). The learning processor unit 640c may process information received from an external device through the communication unit 610 and/or information stored in the memory unit 630. In addition, the output value of the learning processor unit 640c may be transmitted to the external device through the communication unit 610 and/or stored in the memory unit 630.

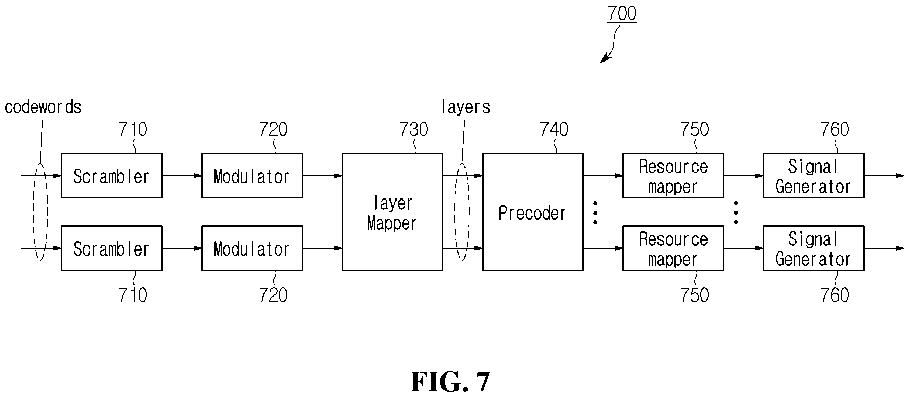

FIG. 7 illustrates a method of processing a transmitted signal applicable to the present disclosure. For example, the transmitted signal may be processed by a signal processing circuit. At this time, a signal processing circuit 700 may include a scrambler 710, a modulator 720, a layer mapper 730, a precoder 740, a resource mapper 750, and a signal generator 760. At this time, for example, the operation/function of FIG. 7 may be performed by the processors 202a and 202b and/or the transceiver 206a and 206b of FIG. 2. In addition, for example, the hardware element of FIG. 7 may be implemented in the processors 202a and 202b of FIG. 2 and/or the transceivers 206a and 206b of FIG. 2. For example, blocks 1010 to 1060 may be implemented in the processors 202a and 202b of FIG. 2. In addition, blocks 710 to 750 may be implemented in the processors 202a and 202b of FIG. 2 and a block 760 may be implemented in the transceivers 206a and 206b of FIG. 2, without being limited to the above-described embodiments.

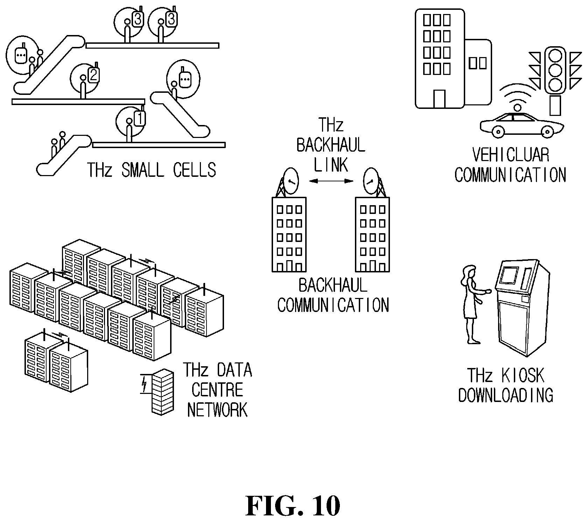

A codeword may be converted into a radio signal through the signal processing circuit 700 of FIG. 7. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 10. Specifically, the codeword may be converted into a bit sequence scrambled by the scrambler 710. The scramble sequence used for scramble is generated based in an initial value and the initial value may include ID information of a wireless device, etc. The scrambled bit sequence may be modulated into a modulated symbol sequence by the modulator 720. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 730. Modulation symbols of each transport layer may be mapped to corresponding antenna port(s) by the precoder 740 (precoding). The output z of the precoder 740 may be obtained by multiplying the output y of the layer mapper 730 by an N*M precoding matrix W. Here, N may be the number of antenna ports and M may be the number of transport layers. Here, the precoder 740 may perform precoding after transform precoding (e.g., discrete Fourier transform (DFT)) for complex modulation symbols. In addition, the precoder 740 may perform precoding without performing transform precoding.

The resource mapper 750 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 760 may generate a radio signal from the mapped modulation symbols, and the generated radio signal may be transmitted to another device through each antenna. To this end, the signal generator 760 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 710 to 760 of FIG. 7. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

## 6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 1 below. That is, Table 1 shows the requirements of the 6G system.

Table 1

| | |
|---|---|
| Per device peak data rate | 1 Tbps |
| E2E latency | 1 ms |
| Maximum spectral efficiency | 100 bps/Hz |
| Mobility support | up to 1000 km/hr |
| Satellite integration | Fully |

(continued)

| AI | Fully |
|---|---|
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

FIG. 10 illustrates an example of a communication structure providable in a 6G system applicable to the present disclosure.

Referring to FIG. 10, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system.

Core implementation technology of 6G system

artificial Intelligence (AI)

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

However, application of a deep neutral network (DNN) for transmission in the physical layer may have the following problems.

Deep learning-based AI algorithms require a lot of training data in order to optimize training parameters. However, due to limitations in acquiring data in a specific channel environment as training data, a lot of training data is used offline. Static training for training data in a specific channel environment may cause a contradiction between the diversity and dynamic characteristics of a radio channel.

In addition, currently, deep learning mainly targets real signals. However, the signals of the physical layer of wireless communication are complex signals. For matching of the characteristics of a wireless communication signal, studies on a neural network for detecting a complex domain signal are further required.

Hereinafter, machine learning will be described in greater detail.

Machine learning refers to a series of operations to train a machine in order to build a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method and a recurrent Boltzmman machine (RNN) method. Such a learning model is applicable.

**Terahertz (THz) communication**

THz communication is applicable to the 6G system. For example, a data rate may increase by increasing bandwidth. This may be performed by using sub-THz communication with wide bandwidth and applying advanced massive MIMO technology.

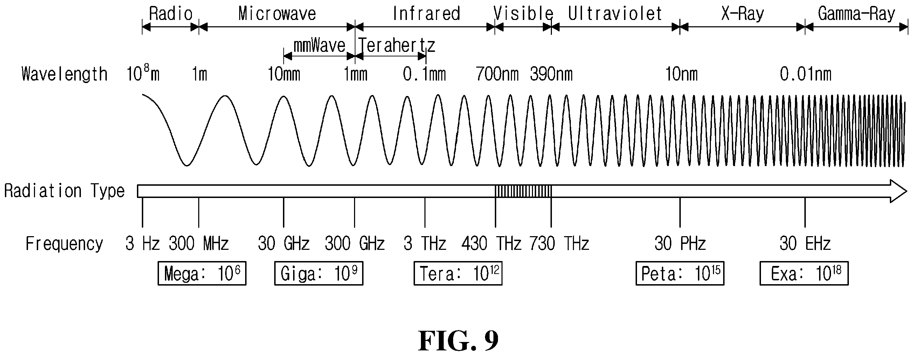

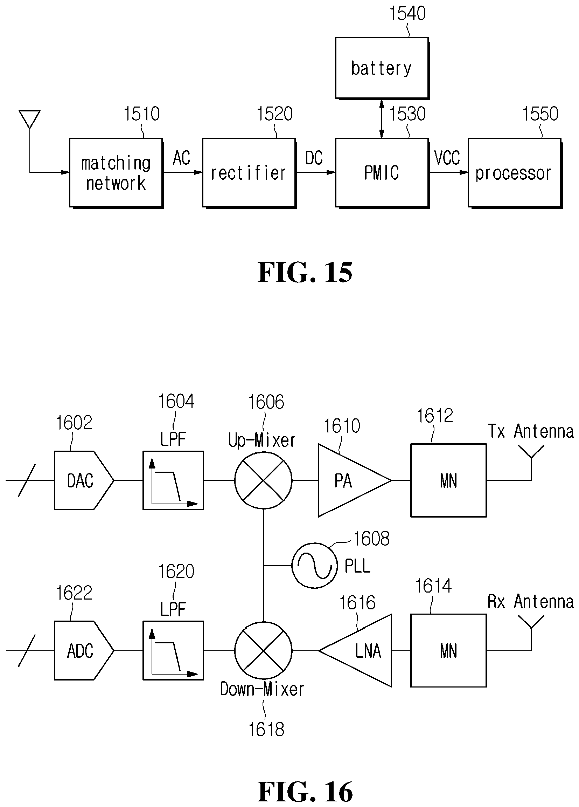

FIG. 9 is a view showing an electromagnetic spectrum applicable to the present disclosure. For example, referring to FIG. 16, THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

The main characteristics of THz communication include (i) bandwidth widely available to support a very high data rate and (ii) high path loss occurring at a high frequency (a high directional antenna is indispensable). A narrow beam width generated by the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

**THz wireless communication**

FIG. 10 is a view showing a THz communication method applicable to the present disclosure.

Referring to FIG. 10, THz wireless communication uses a THz wave having a frequency of approximately 0.1 to 10 THz (1 THz = 1012 Hz), and may mean terahertz (THz) band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays and has a shorter wavelength than the RF/millimeter wave and thus high straightness and is capable of beam convergence.

Specific embodiment of the present invention

The present disclosure is to implement a power shared model for efficient power supply and demand in a wireless communication system. Through the power shared model, devices may share power with each other in a wireless communication system, for example, in a massive IoT environment. According to various embodiments, a device with surplus power may supply power, and a device with insufficient power may receive power. Through this, low-power small personalized devices (e.g., wireless earphones, fitness bands, wearable devices, etc.) may be driven only with received power, enabling efficient battery-free design. Expansion of space and devices to which various embodiments are applied may establish the cornerstone of new services and business opportunities.

One of key performance indicators (KPIs) of 6G is to achieve extremely low power. The design of low-power or battery-free devices of individual devices will be a key enabler for various services in massive Internet of things (IoT). In addition, from the recently highlighted ESG (environment, social, governance) perspective, the design of battery-free devices will be key. Currently, related technologies to implement this include low-power design technologies such as RF (radio frequency) wireless power transmission, energy harvesting (e.g., technology to collect and store external energy such as solar energy or human body kinetic energy), and backscatter, etc. However, in most cases, the collected power is at a low level of $\mu$W to mW at a distance of 1 m, and the amount of received power decreases as the distance from a power transmitter increases. Therefore, utilization of power is low.

Although technology for wireless power transmission currently exists, the short-range magnetic induction method has short coverage, so it is mostly used only in the form of short-range contact. On the other hand, the RF (radio frequency) method is capable of transmitting power over long distances, but has disadvantages such as limited output of the transmitter and a large decrease in received power depending on the distance. Accordingly, there is currently no suitable alternative to long-distance wireless power transmission, and thus technical limitations exist in the design of battery-free devices. For reference, the RF method is inversely proportional to the square of a distance between the transmitter and receiver, as shown in [Equation 1] below.

[Equation 1]

$$P_r = A_e \cos^2 \Phi \frac{P_t G_t}{4\pi R^2}$$

$$A_e = \lambda 2 G_r / 4\pi$$

In [Equation 1], $P_r$ is the amount of received power in wireless power transmission, $A_e$ is the antennas' effective area, $P_t$ is the output power of a transmit antenna, $G_r$ is the gain of a receive antenna, $G_t$ is the gain of the transmit antenna, $\lambda$ is a wavelength, R is a distance between a transmitter and a receiver, and $\cos\Phi$ is a polarization loss factor.

In order to solve this problem, the present disclosure proposes a virtual power shared model as technology of implementing extremely low power to increase power efficiency by allowing various devices coexisting in a local area to receive insufficient power from each other and transfer idle power to each other.

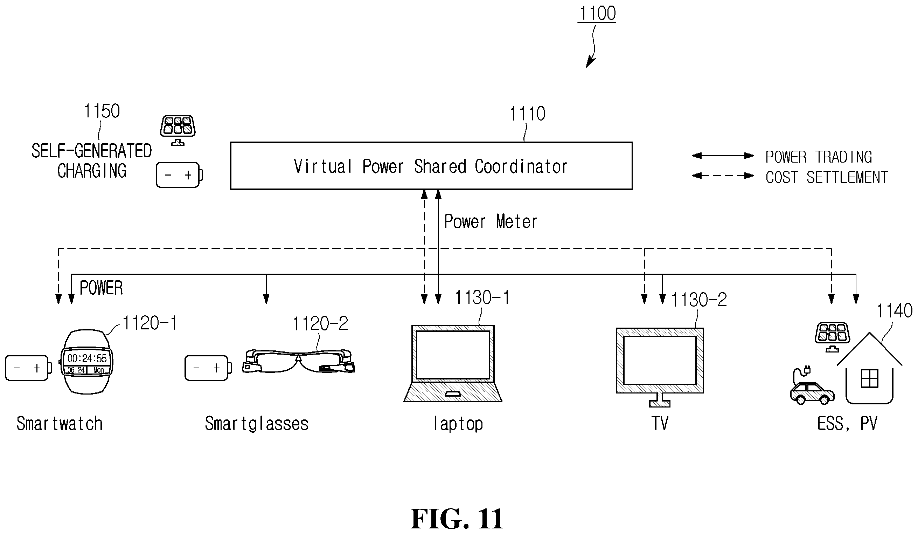

FIG. 11 shows the concept of a virtual power shared model according to an embodiment of the present disclosure.

Referring to FIG. 11, the virtual power shared model 1100 is implemented through compatibility between a virtual power shared coordinator (hereinafter, referred to as a virtual coordinator) 1110 and other devices driven by power. The virtual coordinator 1110 realizes a virtual power shared model through wireless power transmission. The virtual coordinator 1110 checks the amount of power of peripheral devices and redistributes available power (surplus power) to devices with insufficient power, thereby increasing the efficiency of power management through resupply of power. The virtual coordinator 1110 may receive power from peripheral devices, but may also generate and transfer power through self-generated charging 1150 such as solar power. In addition, the virtual coordinator may supply power through a separate power generation or storage device 1140, such as an energy storage system (ESS) or photovoltaic (PV).

As an example, peripheral devices are devices connected to power in a specific space in a house and may include a TV 1130-2, a refrigerator, a washing machine, a set-top box, an Internet router, a laptop 1120-2, etc. In addition, the peripheral devices may be battery-based, low-power personal portable devices, and include a fitness band, a smart watch 1120-1, a wireless earphone, smart glasses 1120-2, a wearable device, etc.

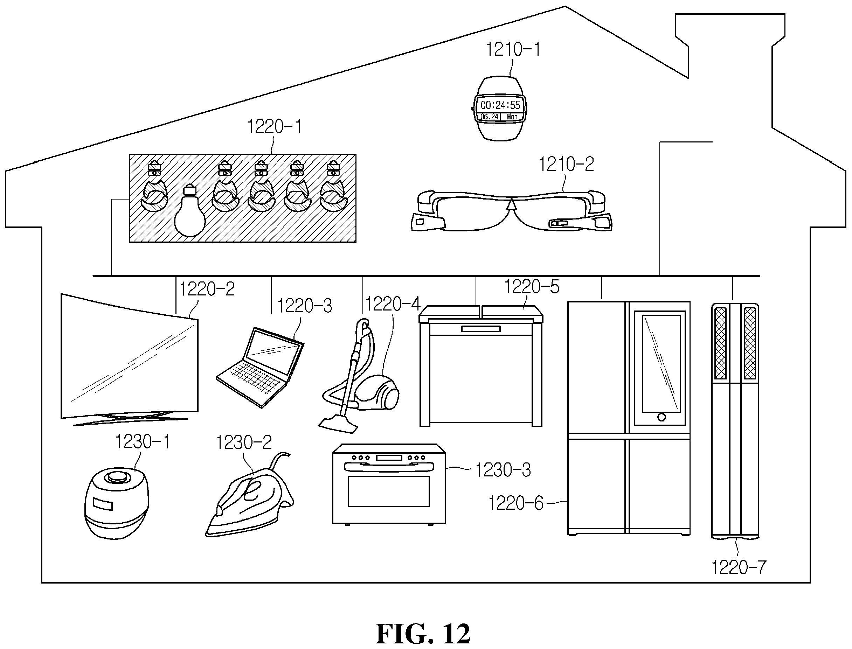

According to various embodiments, the virtual coordinator 1110 may be a separate device as shown in the example of FIG. 11, or a device using existing power may perform the function of the virtual coordinator 1110 as shown in FIG. 12 below.

FIG. 12 shows an example of a virtual power shared model according to an embodiment. FIG. 12 illustrates a case where a virtual coordinator does not exist as a separate device, and devices using power in a specific area share power with each other by autonomously performing the role of a virtual coordinator.

Referring to FIG. 12, at least one of the devices using power may perform the role of a virtual coordinator. For example, devices using power include wired power devices such as a lighting 1220-1, a TV 1220-2, a laptop 1220-3, a vacuum cleaner 1220-4, a kimchi refrigerator 1220-5, and a refrigerator 1220-6, and an air conditioner 1220-7. Alternatively, devices using power include low-power battery-based devices such as a smart watch 1210-1 and smart glasses 1210-2. Alternatively, devices using power include wireless home appliances such as a wireless rice cooker 1230-1, a wireless iron 1230-2, and a wireless oven 1230-2. In addition to this, various devices may operate as virtual coordinators as long as they use power.

As described with reference to FIG. 11, the virtual coordinator may be a separate dedicated device, or as described with reference to FIG. 12, the virtual coordinator may be supported by setting user functions using devices which use all power used in a specific space without a separate device. Generally, home appliances in the house are equipped with communication modules (e.g., Wi-Fi, BT, Zigbee, Lora), and mobile phones also typically include cellular (e.g., LTE, LTE-A, 5G) communication modules. Since the energy transmission means may be implemented based on an existing communication module, any device will be able to transmit and receive energy by applying the energy collection means to the receiver of the device. For example, the energy reception means and the battery may be designed to have a piggy back option as needed. In other words, each device may be equipped with power reception and storage functions by attaching an additional device (e.g., a dongle) containing one of energy reception means and a battery, for example.

Examples of wireless power transmission technologies applicable to wireless communication systems according to various embodiments are shown in [Table 2] below. However, technologies other than the wireless power transmission technologies listed in [Table 2] below may also be applied to wireless communication systems according to various embodiments.

[Table 2]

| | Method 1 | Method 2 | Method 3 | Method 4 | Method 4 |
|---|---|---|---|---|---|
| Medium | RF | RF | RF | Infrared ray | Ultrasonic wave |
| Technology | Transmit 3W TX in 915 MHz band, Optimize receive antenna | Focus on optimal function setting function to safely transmit power using principles of Lytro camera | Use 24 array transmit antenna at 5.8GHz in Wi-Fi band | Transmitter is composed of retroreflector and light source and receiver generates power using ring resonance | Form ultrasonic beam through thousands of small speakers |
| Wireless Frequency | 915MHz | 2.4GHz | 5.8GHz Wi-Fi | Infrared ray | Ultrasonic wave 45 kHz~75 kHz |
| Distance (Max) | 1m | 1m | 1m | 1m | 3m |
| MaxTX Power | $\mu W\sim mW$ | ~mW | ~mW | 1W | ~mW |
| Limitation/ remar ks (human body influence, frequency interference) | A typical mobile phone user will receive far more RF energy from their own mobile phone than they will from a properly installed Powercast transmitte r. | Wireless Power delivers meaningful power to devices at a distance while meeting all of the FCC's stringent Specific Absorption Rate (SAR) requirement s for safety. | RF exposure is always below, and usually substantiall y lower than FDA, FCC and Internation al limits. | Operate only in LOS and is disadvantageo us in transmission of high power | Transmissio n efficiency is not good |

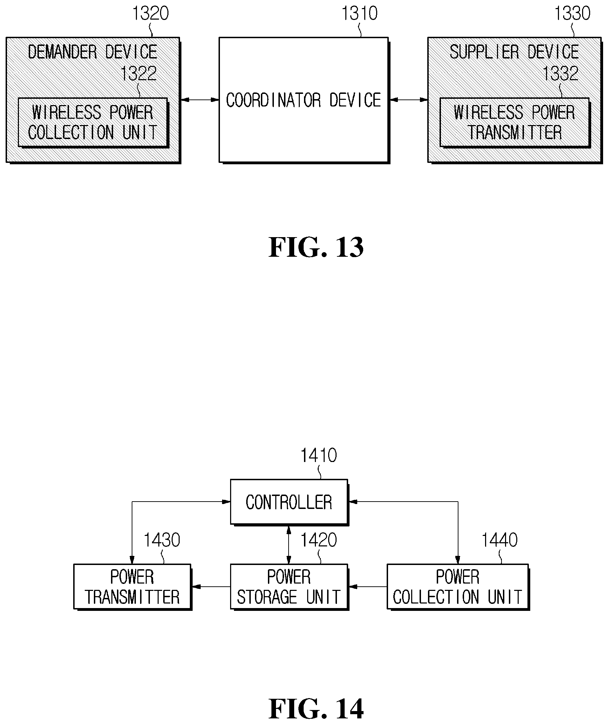

FIG. 13 shows a schematic structure of a wireless communication system according to an embodiment. FIG. 13 shows a structure of a wireless communication system supporting wireless power sharing.

Referring to FIG. 13, the wireless communication system includes a coordinator device 1310, a demander device 1320, and a supplier device 1330.

The coordinator device 1310 manages the power of devices in the network. For example, the coordinator device 1310 may determine the power status of devices in the network, monitor the remaining amount of power, and relay power. According to one embodiment, the coordinator device 1310 receives surplus power from the supplier device 1330 and transmits power to the demander device 1320 with insufficient power. The coordinator device 1310 may increase the power use efficiency by controlling the procedure of sharing power in the network.

The demander device 1320 is a device that demands power. That is, the demander device 1320 includes all devices that require power. The demander device 1320 may include a wireless power collection unit 1322 that detects and stores power supplied through a wireless signal. The demander device 1320 transmits power information to the coordinator device 1310 and receives insufficient power. The demander device 1320 may be a device that uses a battery as a power source, and in some cases, a small capacity super capacitor rather than a battery may be used as a power source.

The supplier device 1330 is a device that supplies power. The supplier device 1330 may include a wireless power transmitter 1332 that transmits power through a wireless signal. The supplier device 1330 transmits power information to the coordinator device 1310 and supplies available surplus power.

The demander device 1320 and the supplier device 1330 are relative concepts determined depending on the situation. Either device may function as a demander device 1320 or a supplier device 1330 depending on the power situation. For example, a low-power device that is generally driven by a battery, such as a smart watch, smart glasses, or a fitness band, may operate as demander device 1320. A wearable device (e.g., smart glasses, a fitness band, a smart watch) may support a wireless power transmission function according to user settings, and in this case, the wearable device may be the demander device 1320. However, the present disclosure is not limited thereto, and any one of various devices using power may operate as the demander device 1320. In addition, for example, smart home appliances, TVs, refrigerators, air conditioners, washing machines, etc. equipped with wireless communication modules may operate as the supplier device 1330 according to user settings. However, the present disclosure is not limited thereto, and any one of various devices using power may operate as the supplier device 1330.

FIG. 14 shows a structure of a device in a wireless communication system according to an embodiment. FIG. 14 shows the functional structure of a coordinator device (e.g., coordinator device 1310 in FIG. 13), a demander device (e.g., demander device 1320 in FIG. 13), or a supplier device (e.g., supplier device 1330 in FIG. 13), as a device capable of participating in power sharing.

Referring to FIG. 14, the device includes a controller 1410, a power storage unit 1420, a power transmitter 1430 and a power collection unit 1440.

The controller 1410 controls the overall operations of the device. For example, the controller 1410 may control other components to perform functions of collecting power from other devices and storing the collected power. In addition, the controller 1410 may control other components to perform a function of supplying stored power to other devices. To this end, the controller 1410 may include memory, at least one processor, etc.

The power storage unit 1420 stores power. The power storage unit 1420 may include at least one of a battery or a super capacitor. The power storage unit 1420 may store surplus power supplied from another device, surplus power supplied from an external power source, etc. for power resupply.

The power transmitter 1430 transmits power through a wireless signal. The power transmitter 1430 may transmit surplus power to a device that has requested power (e.g., demander device, coordinator device). The power stored in the power storage unit 1420 is transmitted to other devices through the power transmitter 1430.

The power collection unit 1440 collects power supplied through a wireless signal. The power collection unit 1440 receives surplus power from other devices (e.g., supplier device, coordinator device). The power received from the supplier device is stored in the power storage unit 1420.

The structure shown in FIG. 14 may be understood as one of the coordinator device, demander device, and supplier device. However, according to another embodiment, in the case of the demander device, the power transmitter 1430 may be excluded. Similarly, according to another embodiment, in the case of the supplier device, at least one of the power storage unit 1420 or the power collection unit 1440 may be excluded.

The device illustrated in FIG. 14 may be a device that performs other functions in addition to power sharing. Accordingly, the device may further include at least one component for a different function (e.g., a function depending on the purpose of the device) in addition to the components shown in FIG. 14.

In addition, signaling of power information may be performed for power sharing. To this end, although not shown in FIG. 14, the device may further include a transceiver capable of transmitting and receiving control information. Here, the transceiver is implemented as hardware separate from the power transmitter 1430 and the power collection unit 1440, or at least some of the hardware circuits (e.g., antennas, lines, filters, etc.) that make up the transceiver may be shared with the circuit of the power transmitter 1430 and the power collection unit 1440.

FIG. 15 shows an example of a configuration of a circuit for receiving and generating power in a wireless communication system according to an embodiment.

Referring to FIG. 15, the circuit for receiving and generating power includes a matching network 1510, a rectifier 1520, a power management integrated circuit (PMIC) 1530, a battery 1540, and a processor 1550. The circuit for receiving and generating power is required to receive and generate wireless power.

The matching network 1510 performs impedance matching between an antenna and a reception circuit. The rectifier 1520 rectifies an alternative current (AC) signal. That is, the rectifier 1520 converts an AC signal into a DC (direct current) signal. The PMIC 1530 manages power. The PMIC 1530 converts and provides input power into voltage or current required by other components that use power. The battery 1540 is charged using power supplied from the PMIC 1530, and supplies the charged power to the PMIC 1530. The processor 1550 consumes power supplied from the PMIC 1530 to perform necessary operations.

When receiving power through a wireless signal, the RF wireless power signal received through the antenna is converted into AC power with minimized loss through the matching network 1510. The AC power is converted into direct current power through the rectifier 1520, and the direct current power may be used as system supply power required for the processor 1550 through the PMIC 1530 or stored in the battery 1540 as surplus power. That is, the energy collected through the circuit for receiving and generating power may be used by the processor 1550 directly through the PMIC 1530, or may be stored in the battery 1540 and then used by the application circuit 1550.

FIG. 16 shows an example of a configuration of a transceiver circuit in a wireless communication system according to an embodiment. Referring to FIG. 16, the transceiver circuit is a transmission chain, including a digital to analog convertor (DAC) 1602 that converts a digital signal into an analog signal, a low pass filter (LPF) 1604 that passes components in a low frequency band, a mixer 1606 for frequency up-conversion, a phase lock loop (PLL) 1608 for generating a local frequency signal for frequency conversion, a power amplifier (PA) 1610 for amplifying a transmission signal, and a matching network 1612 for transmission impedance matching. The transceiver circuit is a reception chain, including a matching network 1614 for reception impedance matching, a low noise amplifier (LNA) 1616 for amplifying a received signal, a mixer 1618 for frequency down-conversion, and an LPF 1620 for passing components in a low frequency band and an analog to digital convertor (ADC) 1622 that converts an analog signal into a digital signal.

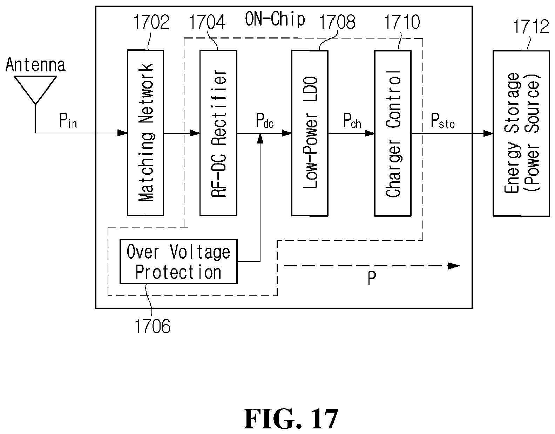

FIG. 17 shows an example of a functional configuration of an energy reception circuit in a wireless communication system according to an embodiment. Referring to FIG. 17, the energy reception circuit includes a matching network 1702 for impedance matching, an RF-DC (direct current) rectifier 1704 for converting alternating current into direct current, an overvoltage protection circuit 1706 that blocks a signal when a voltage exceeding a threshold for circuit protection is generated, a low-power low drop out (LDO) circuit 1708 that generates a signal with a voltage for charging, a charging control circuit 1710 that controls supply of a signal for charging, and an energy storage circuit 1712 that stores surplus power and functions as a power source for other circuits.

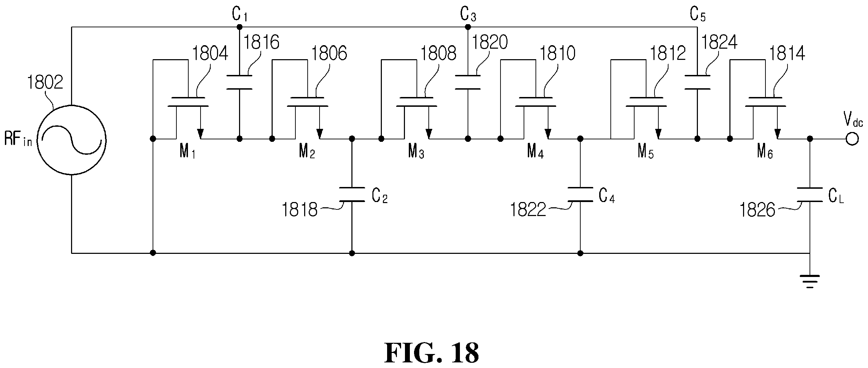

FIG. 18 shows an example of a configuration of a rectifier circuit included in an energy reception circuit in a wireless communication system according to an embodiment. The rectifier circuit illustrated in FIG. 18 may be understood as an example of the RF-DC rectifier 1704 of FIG. 17. Referring to FIG. 18, the rectifier circuit includes metal-oxide-semiconductor field-effect transistors (MOSFETs) 1704, 1706, 1708, 1710, 1712 and 1714 arranged between one end of a RF input 1702 and an output end and capacitors 1716, 1718, 1720, 1722, 1724 and 1726, in order to rectify the RF input 1702. One ends of the capacitors 1716, 1718, 1720, 1722, 1724 and 1726 are connected to the source terminal of each of the MOSFETs 1704, 1706, 1708, 1710, 1712 and 1714, and the other ends of some capacitors 1718, 1722 and 1726 are connected to one end of the RF input 1702, and the other ends of the remaining capacitors 1716, 1720, and 1724 are connected to the other end of the RF input 1702.

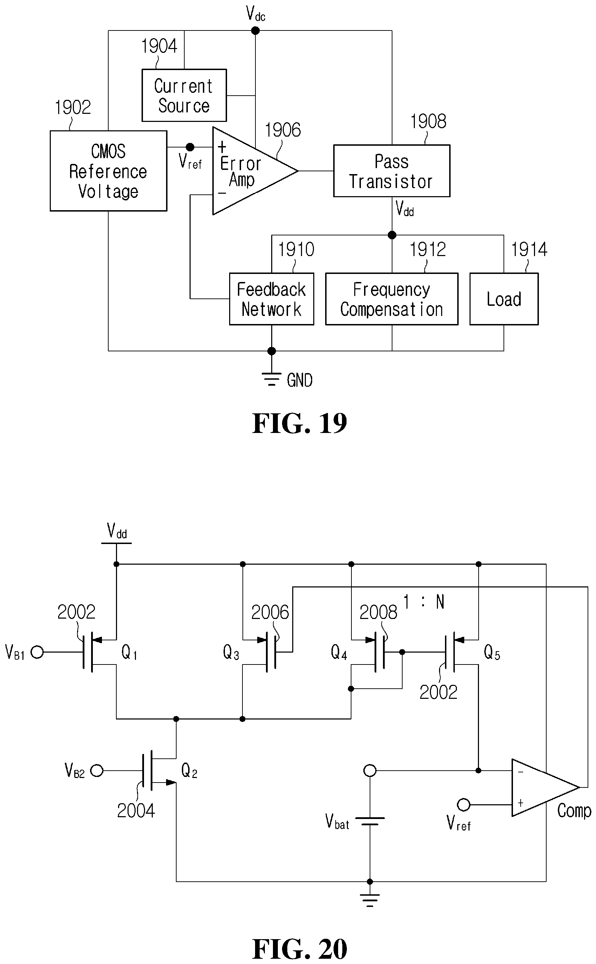

FIG. 19 shows an example of a configuration of an LDO regulator circuit included in an energy reception circuit in a wireless communication system according to an embodiment. The LDO regulator circuit illustrated in FIG. 19 may be understood as an example of the low-power LDO circuit 1708 of FIG. 17. Referring to FIG. 19, the LDO regulator circuit includes a CMOS reference voltage source 1902, a current source 1904, an error amplifier 1906, a pass transistor 1908, and a feedback network 1910, a frequency compensation circuit 1912, and a load 1914. The CMOS reference voltage source 1902 generates a reference voltage $V_{ref}$ and inputs it to the positive (+) terminal of the error amplifier 1906. The negative (-) terminal of the error amplifier 1906 is connected to the feedback network 1910. When comparing the reference voltage $V_{ref}$ and the feedback value, the voltage difference between the positive and negative terminals is amplified to the output voltage of the error amplifier 1906, and the output voltage is connected to the pass transistor 1908. The pass transistor 1908 provides a stable supply voltage $V_{dd}$ by controlling the current flow to the load 1914 through the pass transistor 1908.

FIG. 20 shows an example of a configuration of a charging control circuit included in an energy reception circuit in a wireless communication system according to an embodiment. The charging control circuit illustrated in FIG. 20 may be understood as an example of the charging control circuit 1710 of FIG. 17. Referring to FIG. 20, the charging control circuit includes a plurality of transistors 2002, 2004, 2006, 2008 and 2010 and a comparator 2012. The transistor 2002 and the transistor 2006 form a differential pair Q1-Q3, and the transistor 2008 and the transistor 2010 form a current mirror Q4-Q5. The comparator 2012 prevents battery overcharging. The battery (e.g., the energy storage circuit 1712 in FIG. 17) may be charged using constant current generated by the transistor 2002 and the transistor 2004 using two bias voltages (e.g., $V_{B1}$ and $V_{B2}$). When the battery voltage $V_{bat}$ is lower than the reference voltage $V_{ref}$, the output voltage of the comparator 2012 becomes high and the transistor 2006 is turned off. Two constant currents from the transistor 2002 and the transistor 2008 flow simultaneously into the transistor 2004. Conduction current from the transistor 2010 is amplified when passing through the current mirror. The amplified current may quickly charge the battery. If $V_{bat}$ is higher than $V_{ref}$, the output voltage of the comparator 2012 becomes low and the transistor 2006 is turned off. Two constant currents from the transistor 2002 and the transistor 2006 flow simultaneously into the transistor 2004. In addition, the transistor 2008 and the transistor 2010 are turned off, and the battery is no longer charged.

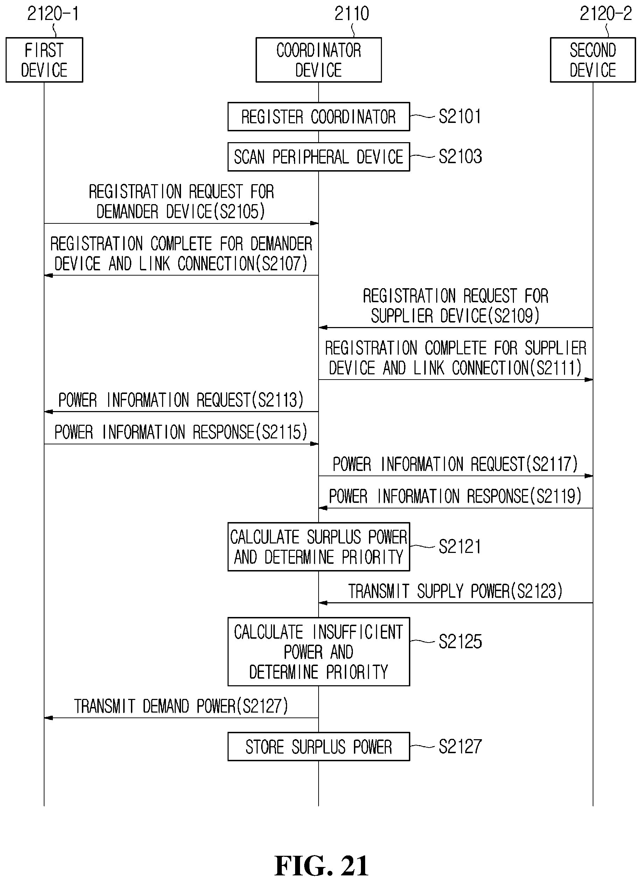

FIG. 21 shows an example of a procedure for power sharing in a wireless communication system according to an embodiment. FIG. 21 illustrates signal exchange between a coordinator device 2110, a first device 2120-1, and a second device 2120-2.

Referring to FIG. 21, in step S2101, the coordinator device 2110 is registered as a coordinator. Here, registration for a coordinator may be performed by changing settings according to user input. That is, the coordinator device 2110 includes an interface that may detect user input, and activates a function of managing power distribution according to a user's instruction input through the interface. Although not shown in FIG. 21, according to one embodiment, the coordinator device 2110 may transmit a signal indicating activation of the coordinator function.

In step S2103, the coordinator device 2110 scans peripheral devices. The coordinator device 2110 may perform scanning by checking the presence or absence of signals transmitted from other devices. According to one embodiment, the coordinator device may detect signals transmitted by other devices for purposes unrelated to power distribution, for scanning. According to another embodiment, the coordinator device 2110 may detect a signal designed for scanning for power sharing. That is, other devices may transmit signals designed to assist scanning of the coordinator device 2110. Here, the signal may include a unique sequence indicating that it is a signal for scanning, and may be transmitted in response to a request from the coordinator device 2110 or may be transmitted periodically without a request. In addition, the coordinator device 2110 may transmit a broadcast signal for triggering a request for registration.

In step S2105, the first device 2120-1 requests registration for a demander device. That is, the first device 2120-1 determines that power needs to be supplemented and requests registration to request power from the coordinator device 2110. Specifically, the first device 2120-1 transmits a registration request message to the coordinator device 2110. The registration request message may include information on at least one of an identifier of the first device 2120-1, a requested registration type (e.g., demander or supplier), a device type, a power source type (e.g., battery, super capacitor, external power source, etc.), or a power usage pattern (e.g., power required per unit time, etc.).

In step S2107, the coordinator device 2110 completes registration of the first device 2120-1 and then establishes a link. That is, the coordinator device 2110 and the first device 2120-1 perform an association procedure. At this time, multiple links, such as a link for communication and a link for wireless power transmission, may be associated. To this end, a message indicating completion of registration between the coordinator device 2110 and the first device 2120-1 and at least one message for link establishment may be transmitted.

In step S2109, the second device 2120-2 requests registration for a supplier device. That is, the second device 2120-2 determines that power supply is possible and requests registration to supply power to the coordinator device 2110. Specifically, the second device 2120-2 transmits a registration request message to the coordinator device 2110. The registration request message may include information on at least one of an identifier of the second device 2120-2, a requested registration type (e.g. demander or supplier), a device type, a power source type (e.g., battery, super capacitor, external power source, etc.), or a power usage pattern (e.g., power required per unit time, etc.).

In step S2111, the coordinator device 2110 completes registration of the second device 2120-2 and then establishes a link. That is, the coordinator device 2110 and the second device 2120-2 perform an association procedure. At this time, multiple links, such as a link for communication and a link for wireless power transmission, may be associated. To this end, a message indicating completion of registration between the coordinator device 2110 and the second device 2120-2 and at least one message for link establishment may be transmitted.

In step S2113, the coordinator device 2110 transmits a power information request message to the first device 2120-1. In step S2115, the first device 2120-1 transmits a power information response message to the coordinator device 2110. In step S2117, the coordinator device 2110 transmits a power information request message to the second device 2120-2. In step S2119, the second device 2120-2 transmits a power information response message to the coordinator device 2110. Through steps S2113 to S2119, the coordinator device 2110 may collect information necessary for power distribution. For example, the collected information may include at least one of supply power, demand power, a distance, or a power source type. Here, the supply power refers to the amount of surplus power that may be supplied, the demand power refers to the amount of insufficient power, and the distance refers to a distance from the coordinator device 2110. For example, an example of information collected in the present embodiment is shown in [Table 3] below.

[Table 3]

| Device Class | Distance | Supply Power | Demand Power | Device type |
|---|---|---|---|---|
| Coordinator | 1m | $\sim\mu W$ | $\sim\mu W$ | Battery |
| Demander | 2m | $\sim mW$ | $\sim mW$ | No Battery |
| Supplier | 3m | $\sim W$ | $\sim W$ | |

In step S2121, the coordinator device 2110 calculates surplus power and determines priority. Specifically, the coordinator device 2110 calculates the amount of sharable surplus power of each of the supplier devices including the second device 2120-2 based on the collected power information and determines priorities among the supplier devices. That is, in addition to the second device 2120-2, there may be additional devices registered as supplier devices, and accordingly, the coordinator device 2110 may determine which supplier device power is received from. Here, priority may be determined based on distance, the amount of supply power, and the power source type. For example, the closer it is to the coordinator device 2110, the higher priority is assigned. If the distance is the same, the greater the amount of supply power, the higher priority is assigned. If the amount of supply power is the same, high priority may be assigned to the supplier device that uses external power rather than a battery. In the present embodiment, the highest priority is assigned to the second device 2120-2.

In step S2123, the coordinator device 2110 receives supply power from the second device 2120-2. That is, the coordinator device 2110 receives power through a wireless signal. Although not shown in FIG. 21, prior to receiving power, the coordinator device 2110 may transmit a power request message requesting power to the second device 2120-2. For example, the power request message may include at least one of information about the amount of demand power or information about a time period for transmitting a signal for transferring power.

In step S2125, the coordinator device 2110 calculates insufficient power and determines priority. Specifically, the coordinator device 2110 calculates the amount of insufficient power of the demander devices including the first device 2120-1 based on the collected power information and determines priorities among the demander devices. That is, in addition to the first device 2120-1, there may be additional devices registered as demander devices, and accordingly, the coordinator device 2110 may determine which demander device power is supplied to. Here, priority may be determined based on the distance, the amount of demand power, and the power source type. For example, the closer it is to the coordinator device 2110, the higher priority is assigned. If the distance is the same, the lower the amount of demand power, the higher priority is assigned. If the amount of demand power is the same, high priority may be assigned to the demander device that does not use external power. In the present embodiment, the highest priority is assigned to the first device 2120-1.

In step S2127, the coordinator device 2110 transmits the demand power to the first device 2120-1. That is, the coordinator device 2110 transmits power through a wireless signal. Although not shown in FIG. 21, prior to transmitting power, the coordinator device 2110 may transmit a power supply message indicating power transmission to the first device 2120-1. For example, the power supply message may include at least one of information about the amount of power supplied and information about a time period for transmitting a signal for transferring power.

In step S2129, the coordinator device 2110 stores surplus power. After transmitting power to at least one demander device according to the determined priority, some of the received power may remain. In this case, the coordinator device 2110 may store the remaining power in an internal power storage means (e.g., a battery) or a separate battery storage means.

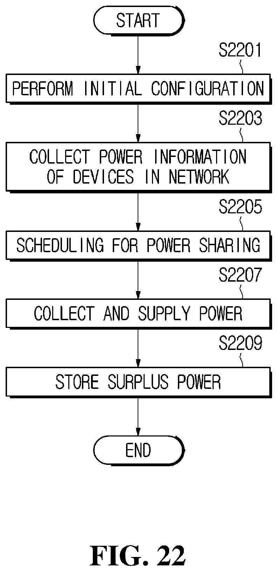

FIG. 22 shows an example of a procedure of managing power in a wireless communication system according to an embodiment. FIG. 22 shows a method of operating a coordinator device.

Referring to FIG. 22, in step S2201, the coordinator device performs initial configuration. That is, the coordinator device performs initially necessary settings to share wireless power in the network. Specifically, the coordinator device may scan peripheral devices, register peripheral devices as suppliers or demanders, and establish links with the peripheral devices. The coordinator device may register all peripheral devices or selectively register them according to user settings.

In step S2203, power information of devices in the coordinator network is collected. That is, the coordinator device may request and receive information necessary for wireless power sharing from the peripheral devices. For example, the power information may include at least one of supply power, demand power, distance from the coordinator device, or power source type.

In step S2205, the coordinator device performs scheduling for power sharing. That is, the coordinator device performs scheduling for sharing wireless power based on the collected power information. Specifically, the coordinator device may determine how much power is received from which device and how much power is supplied to which device. According to one embodiment, the coordinator device may determine priorities between a plurality of suppliers and priorities between a plurality of demanders, and sequentially select at least supplier to supply power and at least one demander to receive power based on the priorities and supply power amounts of the suppliers and the priorities and demand power amounts of the demanders.

In step S2207, the coordinator device collects power and supplies power. In other words, the coordinator device redistributes power to the peripheral devices. The coordinator device may redistribute power according to the scheduling performed in step S2205. Specifically, the coordinator device may receive power from the supplier and transmit power to the device.

In step S2209, the coordinator device stores surplus power. That is, the coordinator device stores the remaining power after power sharing in the power storage means. The surplus power is stored in a storage means accessible by the coordinator device. Accordingly, the coordinator device may supply the stored surplus power to the demander in response to a power supply request from the demander later, without requesting power supply from the supplier device.

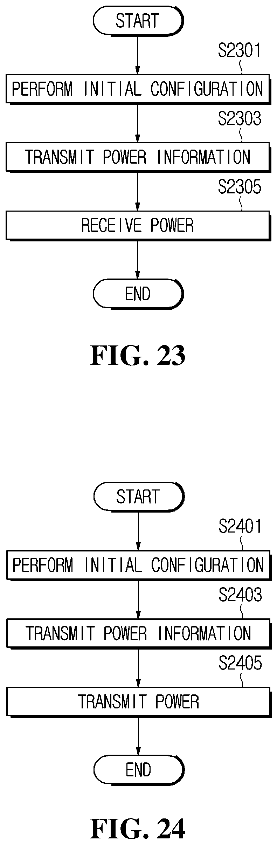

FIG. 23 shows an example of a procedure of receiving power in a wireless communication system according to an embodiment. FIG. 23 shows a method of operating a demander device.

Referring to FIG. 23, in step S2301, the demander device performs initial configuration. That is, the demander device registers the device for wireless power sharing and establishes at least one link. At this time, the supplier device requests registration for a demander from the coordinator. Accordingly, when the coordinator device completes registration of the demander device, at least one link is connected between the demander device and the coordinator device, and wireless power may be shared according to subsequent operations.

In step S2303, the demander device transmits power information. That is, the demander device may transmit power information to the coordinator device. That is, the supplier device transmits information necessary for wireless power sharing to the coordinator device in response to the coordinator device's request. For example, the power information may include at least one of supply power, demand power, a distance from the coordinator device, or a power source type.

In step S2305, the coordinator device receives power. Power reception means that the demander device receives power transmitted by the coordinator device. As an example, the demander device may request insufficient power and receive power. In addition, power may be received arbitrarily according to the power calculation results of the coordinator device.

FIG. 24 shows an example of a procedure of supplying power in a wireless communication system according to an embodiment. FIG. 24 shows a method of operating a supplier device.

Referring to FIG. 24, in step S2401, the supplier device performs initial configuration. That is, the supplier device registers the device for wireless power sharing and establishes at least one link. At this time, the supplier device requests registration for a supplier from the coordinator. Accordingly, when the coordinator device completes registration of the supplier device, at least one link is connected between the supplier device and the coordinator device, and wireless power may be shared according to subsequent operations.

In step S2403, the supplier device transmits power information. That is, the supplier device may transmit power information to the coordinator device. That is, the supplier device transmits information necessary for wireless power sharing to the coordinator device in response to the coordinator device's request. For example, the power information may include at least one of supply power, demand power, a distance from the coordinator device, or a power source type.

In step S2405, the coordinator device transmits power. According to one embodiment, the supplier device may transmit surplus power arbitrarily. According to another embodiment, the supplier device may transmit power in response to the coordinator device's request.

As described above, power may be shared by management of the coordinator device in the network. In the various embodiments described above, the coordinator device was described as a separate object from the supplier device and the demander device. However, since the coordinator device may also be a device that operates using power, in this case, the coordinator device may also be a supplier or demander. That is, the coordinator device may transmit power for other demanders or receive power from other suppliers.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

[Industrial Availability]

The embodiments of the present disclosure are applicable to various radio access systems. Examples of the various radio access systems include a $3^{rd}$ generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method of operating a coordinator device in a wireless communication system, the method comprising:

   registering at least one demander device and at least one supplier device;
   receiving power information from the at least one demander device and the at least one supplier device;
   performing scheduling for power sharing based on the power information; and
   receiving power from the at least one supplier device according to the scheduling and transmitting power to the at least one demander device.

2. The method of claim 1, further comprising:
   storing surplus power after transmitting the power.

3. The method of claim 1, wherein the power information includes at least one of supply power, demand power, a distance or a power source type.

4. The method of claim 1, wherein the performing the scheduling comprises, determining priority of the at least one demander device and priority of the at least one supplier device, and wherein the priority is determined based on a distance from the coordinator device, an amount of supply power, an amount of demand power and a power source type.

5. The method of claim 1, further comprising:
   transmitting a broadcast signal for triggering a registration request of the at least one demander device and the at least one supplier device.

6. The method of claim 1, further comprising:
   scanning peripheral devices by detecting signals transmitted from the at least one demander device and the at least one supplier device.

7. The method of claim 1, further comprising:
   activating a coordinator function based on user input.

8. A method of operating a demander device in a wireless communication system, the method comprising:

   transmitting a message requesting registration for a demander to a coordinator device;
   transmitting power information of the demander device to the coordinator device; and
   receiving power from the coordinator device according to scheduling for power sharing determined based on the power information.

9. A method of operating a supplier device in a wireless communication system, the method comprising:

   transmitting a message requesting registration for a supplier to a coordinator device;
   transmitting power information of the supplier device to the coordinator device; and
   transmitting power to the coordinator device according to scheduling for power sharing determined based on the power information.

10. A coordinator device in a wireless communication system, comprising:

   a transceiver;
   a circuit for power reception and transmission; and
   a processor coupled to the transceiver and the circuit,
   wherein the processor is configured to:

      register at least one demander device and at least one supplier device;
      receive power information from the at least one demander device and the at least one supplier device;
      perform scheduling for power sharing based on the power information; and
      receive power from the at least one supplier device according to the scheduling and transmit power to the at least one demander device.

11. A demander device in a wireless communication system, comprising:

   a transceiver;
   a circuit for power reception; and
   a processor coupled to the transceiver and the circuit,
   wherein the processor is configured to:

      transmit a message requesting registration for a demander to a coordinator device;
      transmit power information of the demander device to the coordinator device; and
      receive power from the coordinator device according to scheduling for power sharing determined based on the power information.

12. A supplier device in a wireless communication system, comprising:

   a transceiver;
   a circuit for power transmission; and
   a processor coupled to the transceiver and the circuit,
   wherein the processor is configured to:

      transmit a message requesting registration for a supplier to a coordinator device;
      transmit power information of the supplier device to the coordinator device; and
      transmit power to the coordinator device according to scheduling for power sharing determined based on the power information.

13. A device comprising:

   at least one processor; and
   at least one computer memory coupled to the at least one processor and configured to store instructions indicating operations as executed by the at least one processor,
   wherein the operations comprise:

      registering at least one demander device and at least one supplier device;
      receiving power information from the at least one demander device and the at least one supplier device;
      performing scheduling for power sharing based on the power information; and
      receiving power from the at least one supplier device according to the scheduling and transmitting power to the at least one demander device.

14. A non-transitory computer-readable medium storing at least one instruction, comprising the at least one instruction executable by a processor,
wherein the at least one instruction controls a device to:

   register at least one demander device and at least one supplier device;
   receive power information from the at least one demander device and the at least one supplier device;

perform scheduling for power sharing based on the power information; and
receive power from the at least one supplier device according to the scheduling and transmit power to the at least one demander device.

100

Home Appliance —100e

100f— IoT device

130

120 —150a        150a   Hand-held
                         device —100d

150a                           120

140— AI
     Server/    Network
     device      (5G)

150a                    XR device —100c

100a— Robot                120

150a  120a   120   150a   150a

100b-1— Vehicle          Vehicle —100b-2

              150b

# FIG. 1

**FIG. 2**

Device(300)

| Communication unit(310)<br>(e.g.,5G Communication unit) | Control unit(320)<br>(e.g.,processor(s)) |
| Communication circuit(312)<br>(e.g.,processor(s),Memory(s)) | Memory unit(330)<br>(e.g.,RAM,storage) |
| Transceiver(s)(314)<br>(e.g.,RF unit(s),antenna(s)) | Additional components(340)<br>(e.g.,power unit/battery, I/O unit,<br>driving unit, computing unit) |

**FIG. 3**

440a

Power supply
unit

400

408

410

Communication
unit

420

Control
unit

430

Memory
unit

440c

I/O unit

Display

440d

440b

Interface
unit

**FIG. 4**

Car or autonomous driving car (500)

| Communication unit (510) |
| Control unit (520) |
| Memory unit (530) |
| Driving unit (540a) |
| Power supply unit (540b) |
| Sensor unit (540c) |
| Autonomous driving unit (540d) |

550

552

Device (200a,200b)

| Communication unit (512) |
| Control unit (522) |
| Memory unit (532) |
| Driving unit (540a) |
| Power supply unit (540b) |
| Sensor unit (540c) |
| Autonomous driving unit (540d) |

**FIG. 5**

**FIG. 6**

EP 4 391 302 A1

**FIG. 7**

**FIG. 8**

EP 4 391 302 A1

**FIG. 9**

THz SMALL CELLS

THz BACKHAUL LINK

BACKHAUL COMMUNICATION

VEHICLUAR COMMUNICATION

THz DATA CENTRE NETWORK

THz KIOSK DOWNLOADING

**FIG. 10**

1100

1150

SELF-GENERATED
CHARGING

1110

Virtual Power Shared Coordinator

←——→ POWER TRADING
←----→ COST SETTLEMENT

Power Meter

POWER

1130-1

1130-2

1140

1120-1

1120-2

Smartwatch

Smartglasses

laptop

TV

ESS, PV

**FIG. 11**

**FIG. 12**

1320

1310

1330

DEMANDER DEVICE
1322

WIRELESS POWER
COLLECTION UNIT

COORDINATOR DEVICE

SUPPLIER DEVICE
1332

WIRELESS POWER
TRANSMITTER

## FIG. 13

1410

CONTROLLER

1430

POWER
TRANSMITTER

1420

POWER
STORAGE UNIT

1440

POWER
COLLECTION UNIT

## FIG. 14

FIG. 15

FIG. 16

**FIG. 17**

**FIG. 18**

EP 4 391 302 A1

$V_{dc}$

1904

Current Source

1902

CMOS Reference Voltage

$V_{ref}$

1906

+ Error Amp −

1908

Pass Transistor

$V_{dd}$

1910

Feedback Network

1912

Frequency Compensation

1914

Load

GND

## FIG. 19

$V_{dd}$

2002

$V_{B1}$ — $Q_1$

2006

$Q_3$

2008

$Q_4$

1 : N

$Q_5$

2002

$V_{B2}$ — $Q_2$

2004

$V_{bat}$

$V_{ref}$

− + Comp

## FIG. 20

2120-1            2110            2120-2

| FIRST DEVICE | COORDINATOR DEVICE | SECOND DEVICE |

REGISTER COORDINATOR —S2101

SCAN PERIPHERAL DEVICE —S2103

REGISTRATION REQUEST FOR DEMANDER DEVICE(S2105)

REGISTRATION COMPLETE FOR DEMANDER DEVICE AND LINK CONNECTION(S2107)

REGISTRATION REQUEST FOR SUPPLIER DEVICE(S2109)

REGISTRATION COMPLETE FOR SUPPLIER DEVICE AND LINK CONNECTION(S2111)

POWER INFORMATION REQUEST(S2113)

POWER INFORMATION RESPONSE(S2115)

POWER INFORMATION REQUEST(S2117)

POWER INFORMATION RESPONSE(S2119)

CALCULATE SURPLUS POWER AND DETERMINE PRIORITY —S2121

TRANSMIT SUPPLY POWER(S2123)

CALCULATE INSUFFICIENT POWER AND DETERMINE PRIORITY —S2125

TRANSMIT DEMAND POWER(S2127)

STORE SURPLUS POWER —S2127

**FIG. 21**

START

S2201
PERFORM INITIAL CONFIGURATION

S2203
COLLECT POWER INFORMATION
OF DEVICES IN NETWORK

S2205
SCHEDULING FOR POWER SHARING

S2207
COLLECT AND SUPPLY POWER

S2209
STORE SURPLUS POWER

END

# FIG. 22

START

S2301

PERFORM INITIAL CONFIGURATION

S2303

TRANSMIT POWER INFORMATION

S2305

RECEIVE POWER

END

**FIG. 23**

START

S2401

PERFORM INITIAL CONFIGURATION

S2403

TRANSMIT POWER INFORMATION

S2405

TRANSMIT POWER

END

**FIG. 24**

<div align="center">

**INTERNATIONAL SEARCH REPORT**

</div>

| | |
|---|---|
| | International application No. |
| | **PCT/KR2021/011042** |

| | |
|---|---|
| **A.** | **CLASSIFICATION OF SUBJECT MATTER** |
| | **H02J 50/20**(2016.01)i; **H02J 50/40**(2016.01)i; **H02J 50/80**(2016.01)i |

According to International Patent Classification (IPC) or to both national classification and IPC

| | |
|---|---|
| **B.** | **FIELDS SEARCHED** |

Minimum documentation searched (classification system followed by classification symbols)

H02J 50/20(2016.01); B60L 11/18(2006.01); G06Q 50/06(2012.01); G08G 1/123(2006.01); H02J 17/00(2006.01); H02J 50/12(2016.01); H02J 7/02(2006.01); H04B 7/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코디네이터(coordinator), 요구자(demander), 공급자(supplier), 공유(sharing)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-1844283 B1 (SAMSUNG ELECTRONICS CO., LTD.) 03 April 2018 (2018-04-03)<br>See paragraphs [0034]-[0067], [0091]-[0102] and [0126]-[0148]; and figures 1-2 and 6-7. | 1-14 |
| Y | KR 10-2016-0052233 A (SAMSUNG ELECTRONICS CO., LTD.) 12 May 2016 (2016-05-12)<br>See paragraphs [0053]-[0054] and [0095]-[0098]; and figures 1 and 11-15. | 1-14 |
| A | KR 10-1852722 B1 (KOREA ELECTRIC POWER CORPORATION) 27 April 2018 (2018-04-27)<br>See paragraphs [0038]-[0056]; and figure 1. | 1-14 |
| A | JP 2013-033403 A (DENSO CORP.) 14 February 2013 (2013-02-14)<br>See entire document. | 1-14 |
| A | US 2018-0034321 A1 (AZBIL NORTH AMERICA RESEARCH AND DEVELOPMENT, INC.) 01 February 2018 (2018-02-01)<br>See entire document. | 1-14 |

| | |
|---|---|
| ☐ Further documents are listed in the continuation of Box C. | ☑ See patent family annex. |

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 May 2022** | **17 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| | International application No. |
| --- | --- |
| | **PCT/KR2021/011042** |

| Patent document cited in search report | | | Publication date (day/month/year) | Patent family member(s) | | | Publication date (day/month/year) |
| --- | --- | --- | --- | --- | --- | --- | --- |
| KR | 10-1844283 | B1 | 03 April 2018 | EP | 2560356 | A2 | 20 February 2013 |
| | | | | EP | 2560356 | A3 | 16 September 2015 |
| | | | | EP | 2560356 | B1 | 21 March 2018 |
| | | | | KR | 10-2013-0020021 | A | 27 February 2013 |
| | | | | US | 2013-0043738 | A1 | 21 February 2013 |
| | | | | US | 2018-0041622 | A1 | 08 February 2018 |
| | | | | US | 9860358 | B2 | 02 January 2018 |
| KR | 10-2016-0052233 | A | 12 May 2016 | KR | 10-2337934 | B1 | 13 December 2021 |
| | | | | US | 2016-0126779 | A1 | 05 May 2016 |
| | | | | US | 9979241 | B2 | 22 May 2018 |
| KR | 10-1852722 | B1 | 27 April 2018 | None | | | |
| JP | 2013-033403 | A | 14 February 2013 | JP | 5360157 | B2 | 04 December 2013 |
| | | | | US | 2013-0035823 | A1 | 07 February 2013 |
| | | | | US | 8781675 | B2 | 15 July 2014 |
| US | 2018-0034321 | A1 | 01 February 2018 | US | 10367374 | B2 | 30 July 2019 |

Form PCT/ISA/210 (patent family annex) (July 2019)